# EUROPEAN PATENT SPECIFICATION

(11) **EP 2 231 314 B1**
(45) Date of publication and mention of the grant of the patent: **28.10.2015**
(21) Application number: 08862642.9
(22) Date of filing: 15.12.2008
(51) Int. Cl.: B32B 5/02, B32B 27/08, B32B 27/12, B32B 27/20

(54) **POLYOLEFIN MULTILAYER MEMBRANES**
POLYOLEFIN MEHRSCHICHTMEMBRANEN
MEMBRANES MULTICOUCHES EN POLYOLEFINES

(30) Priority: 18.12.2007 EP 07150086; 20.12.2007 US 8477
(43) Date of publication of application: 29.09.2010
(73) Proprietor: Basell Poliolefine Italia S.r.l., 20127 Milano (IT)
(72) Inventor: LUNGHI, Luca, I-44100 Ferrara (IT); MEDRI, Alessandro, I-44100 Ferrara (IT); CREDALI, Umberto, IT/I-44124 Ferrara (FE) (IT); FELISATI, Andrea, I-44100 Ferrara (IT)
(74) Representative: Gaverini, Gaetano Luigi Attilio
(86) International application number: PCT/EP2008/067495
(87) International publication number: WO 2009/077481

(56) References cited:
- EP-A1- 0 483 523
- US-A- 4 900 444
- US-A- 5 352 513
- US-A- 5 623 021
- US-A- 6 096 213
- US-A1- 2005 222 314
- US-A1- 2007 194 482

## Description

The present invention relates to a polyolefin membrane suited for use in waterproofing applications. In particular, the present invention relates to a membrane for use in roofing or geomembrane applications. Such membrane comprises a base layer and a top layer, where the base layer comprises a heterophasic composition of olefin polymers and the top layer comprises one or more propylene copolymers.

Multilayer membranes made of or comprising polyolefin materials are known in the art.

It is also known that the multilayer structure makes it possible to achieve advantageous effects, as disclosed in particular in the published US application No. 2007/0194482. In fact, as explained in the said document, it is known that special properties such as fire retardancy, UV resistance, enhanced strength, can be achieved by coupling a thin layer of material with special properties on top of a layer of standard base material.

While describing many specific multilayer structures where TPO materials, comprising thermoplastic polyolefins like polyprypylene and rubbery polyolefins like ethylene-propylene polymers, can be used, such document fails to provide any detailed description of the composition and relative amounts of the polyolefin components in the said TPO materials.

The present applicant has now found that by using selected materials in both the base layer and the top layer, a particularly advantageous and unusual set of properties is achieved.

In fact the membrane of the invention has improved tensile properties and tear resistance, reduced surface stickiness and good thermal weldability.

Thus the present invention provides a membrane comprising a base layer (A) and a top layer (B), where the base layer (A) is made of a heterophasic composition (I) comprising the hollowing polymer components, all percent amounts being by weight:
a) 10-40%, preferably 20-40%, more preferably 25-38%, of a propylene homopolymer, or a copolymer of propylene with ethylene or a CH₂=CHR α-olefin, where R is a C₂-C₈ alkyl radical, or a copolymer of propylene with ethylene and said CH₂=CHR α-olefin, said copolymers containing over 85% of propylene, and having a fraction insoluble in xylene at room temperature greater than 80%; and
b) 60-90%, preferably 60-80%, more preferably 62-75%, of one or more copolymers selected from (b1) copolymers of ethylene with propylene or a CH₂=CHR α-olefin, where R is a C₂-C₈ alkyl radical, and optionally minor quantities of a diene, and (b2) copolymers of ethylene with propylene and said α-olefin, and optionally minor quantities of a diene, said copolymers containing ethylene in a quantity lower than 40%, preferably from 20 to 38%, and having solubility in xylene at room temperature greater than 70%, preferably greater than 80%;
   the amounts of (a) and (b) being referred to the total weight of (a) and (b); and the top layer (B) comprises a propylene homopolymer or a copolymer (i) of propylene with ethylene, or a copolymer (ii) of propylene with CH₂=CHR α-olefin, where R is a C₂-C₈ alkyl radical, or a copolymer (iii) of propylene with ethylene and said α-olefin, or a combination of two or more of said homopolymer and copolymers (i), (ii) and (iii), all the said copolymers containing from 65 to 99% by weight of propylene; said top layer (B) being at least partially bonded to the base layer (A).

The said copolymers (i) to (iii) and their combinations are preferred components for the top layer (B).

In addition to the previously said advantageous properties, the membrane of the invention allows an optimal adhesion of metal layers, inks and colorants in general to the outside surface of the top layer (B). Consequently excellent scratch resistance and UV resistance are achieved as well. It is also possible to add coloring and architectural effects.

Preferably the top layer (B) is at least partially bonded to the base layer (A) in the absence of a bonding agent (like a hot melt adhesive) between the two layers.

In the present description room temperature refers to a temperature around 25°C.

In the heterophasic composition (I) it is preferable that component (a) be a copolymer instead of a homopolymer. Preferably the propylene content in the copolymers of component (a) is from 90 to 99% by weight.

The fraction insoluble in xylene at room temperature of the polymers of component (a) preferably ranges from 85 to 99% in the case of homopolymers, and from 85 to 95% in the case of copolymers.

Preferably the heterophasic composition (I) has flexural modulus of 50 MPa or higher.

A membrane wherein the heterophasic composition (I) contains at least 20% by weight of component (a) is particularly preferred, because of its superior mechanical properties. Examples of the above mentioned CH₂=CHR α-olefins where R is a C₂-C₈ alkyl radical, present in the heterophasic composition (I) and in copolymers (i), (ii) and (iii), are butene-1, pentene-1, 4-methyl-pentene-1, hexene-1, and octene-1. Butene-1 is preferred.

Whenever present, the amount of diene in component (b) of the heterophasic composition (I) is preferably from 1 to 10% by weight with respect to the total weight of component (b). Examples of dienes are butadiene, 1,4-hexadiene, 1,5-hexadiene, and ethylidene-1-norbornene.

Examples of heterophasic composition (I) are described in published European patent application EP-A-0472946 and in WO03/011962, whose content is incorporated in this patent application for reference purposes.

The heterophasic composition (I) can be prepared by mixing the previously prepared components (a) and (b) in the fluid state, i.e., at temperatures greater than their softening or melting point, or, more preferably, by sequential polymerization in two or more stages. It is preferred to carry out the polymerization processes for the preparation of the single components or of the heterophasic composition (sequential polymerization) in the presence of a highly stereospecific Ziegler-Natta catalyst. In particular the catalyst system used comprises (1) a solid catalyst component containing a titanium compound and an electron-donor compound supported on magnesium chloride, and (2) an Al-containing cocatalyst and optionally (3) an electron-donor compound (external donor).

The solid catalyst component (1) contains as electron-donor a compound generally selected among the ethers, ketones, lactones, compounds containing N, P and/or S atoms, and mono-and dicarboxylic acid esters.

Particularly suited among the said electron-donor compounds are phthalic acid esters and succinic acid esters.

Suitable succinic acid esters are represented by the formula (I): 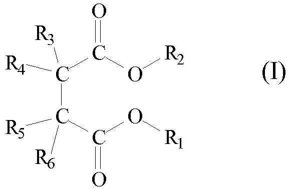 wherein the radicals R₁ and R₂, equal to or different from each other, are a C1-C20 linear or branched alkyl, alkenyl, cycloalkyl, aryl, arylalkyl or alkylaryl group, optionally containing heteroatoms; the radicals R₃ to R₆ equal to or different from each other, are hydrogen or a C1-C20 linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.

R₁ and R₂ are preferably C1-C8 alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆ are particularly preferred. Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-containing compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in suspension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

Other catalysts that may be used are metallocene-type catalysts, as described in USP 5,324,800 and EP-A-0 129 368; particularly advantageous are bridged bis-indenyl metallocenes, for instance as described in USP 5,145,819 and EP-A-0 485 823. Another class of suitable catalysts are the so-called constrained geometry catalysts, as described in EP-A-0 416 815 (Dow), EP-A-0 420 436 (Exxon), EP-A-0 671 404, EP-A-0 643 066 and WO 91/04257. These metallocene compounds may be used in particular to produce the component (b).

The above mentioned sequential polymerization process for the production of the heterophasic composition (I) comprises at least two stages, where in the first stage propylene is polymerized, optionally in the presence of ethylene and/or said α-olefin as comonomer(s), to form component (a), and in the subsequent stage(s) mixtures of ethylene/propylene and/or an other α-olefin and optionally a diene are polymerized to form component (b). The polymerization processes are carried out in either liquid, gas, or liquid/gas phase. The reaction temperature in the various stages of polymerization can be equal or different, and generally ranges from 40 to 90°C, preferably from 50 to 80°C for component (a), and from 40 to 60°C for component (b).

The pressure of a single stage, if carried out in liquid monomer, is the one which competes with the vapor pressure of the liquid propylene at the operating temperature used, and is modified by the overpressure of the monomer(s) and the hydrogen used as molecular weight regulator, and possibly by the vapor pressure of the small quantity of inert diluent used to feed the catalyst mixture.

The polymerization pressure, if done in liquid phase, indicatively can be from 5 to 30 atm. Examples of sequential polymerization processes are described in the said published European patent application EP-A-0472946 and WO03/011962.

The MFR values, measured according to ASTM D1238, at 230°C/2.16 kg, of the heterophasic composition (I) and of the homo- and copolymers of the top layer (B) is generally from 0.1 to 100 g/10 min, preferably from 0.2 to 50 g/10 min.

The homopolymer and the copolymers (i), (ii) and (iii), to be used for the top layer (B), can be prepared with the same polymerisation catalyst and polymerisation processes as above described for the preparation of the polymer component (a) of the heterophasic composition (I).

If compositions of the said copolymers (i), (ii) and (iii) are used for the top layer (B), such compositions can be obtained by blending the said copolymers in the molten state, or the compositions can be prepared directly with a sequential polymerisation as previously described for the preparation of the heterophasic composition (I). When a sequential polymerisation is used, it is preferable to carry out all the polymerisation stages under the polymerisation conditions explained above for the preparation of component (a) of the heterophasic composition (I).

Preferred examples of compositions of the said copolymers (i), (ii) and (iii) are the compositions comprising, all percent amounts being by weight:
1) 20-80%, preferably 20-60%, more preferably 30-50%, of one or more propylene copolymers selected from the group consisting of (1.i) propylene/ethylene copolymers containing 1-7% of ethylene; (1.ii) copolymers of propylene with a CH₂=CHR α-olefin, where R is a C₂-C₈ alkyl radical, containing 2-10% of the said α-olefin; (1.iii) copolymers of propylene with ethylene and a CH₂=CHR α-olefin, where R is a C₂-C₈ alkyl radical, containing 0.5-4.5% of ethylene and 2-6% of the said α-olefin, provided that the total content of ethylene and α-olefin in (1.iii) be equal to or lower than 6.5%;
2) 20-80%, preferably 40-80%, more preferably 50-70%, of one or more propylene copolymers selected from the group consisting of (2.ii) copolymers of propylene with a CH₂=CHR α-olefin, where R is a C₂-C₈ alkyl radical, containing from more than 10% to 30% of the said α-olefin; (2.iii) copolymers of propylene with ethylene and a CH₂=CHR α-olefin, where R is a C₂-C₈ alkyl radical, containing 1-7% of ethylene and 6-15% of the said α-olefin;
the amounts of (1) and (2) being referred to the total weight of (1) and (2).

Other preferred examples of compositions of the said copolymers (i), (ii) and (iii) are the compositions comprising, all percent amounts being by weight:
1) from 15% to 60%, preferably from 20 to 60%, more preferably from 20 to50%, of (1.ii) a copolymer of propylene with a CH₂=CHR α-olefin, where R is a C₂-C₈ alkyl radical, containing more than 10%, but less than 14%, of said α-olefin;
2) from 40% to 85%, preferably from 40 to 80%, more preferably from 50 to 80%, of (2.ii) a copolymer of propylene with a CH₂=CHR α-olefin, where R is a C₂-C₈ alkyl radical, containing from 14% to 30% of said α-olefin, or (2.iii) a copolymer of propylene with ethylene and one or more CH₂=CHR α-olefin, where R is a C₂-C₈ alkyl radical, containing from 0.5% to 3% of ethylene and from 14% to 30% of said α-olefin;
the amounts of (1) and (2) being referred to the total weight of (1) and (2).

Preferably the total amount of the said α-olefin(s) in the total composition is greater than 10%, more preferably greater than 13%.

Examples of such preferred compositions of the said copolymers (i), (ii) and (iii), and of their preparation, are disclosed in the published applications EP0560326, EP0674991, WO 00/11076 and WO 03/031514.

The desired MFR values for the heterophasic composition (I) and for the homo- and the copolymers (i), (ii) and (iii), or compositions of said homo- and copolymers, to be used in the membrane of the invention, can be obtained directly in polymerization, by adequately regulating the molecular weight regulator (hydrogen, for example), or can be obtained by subjecting said polymer components or compositions to visbreaking. Said polymer chain scissioning or visbreaking is carried out by using well known techniques. One of them consists of using peroxides which are added in sufficient quantities to the polymer composition to provide the desired degree of visbreaking, upon heating, generally in an extruder.

The peroxides which are most conveniently used in the polymer visbreaking process have a decomposition temperature preferably ranging from 150°C to 250°C. Examples of said peroxides are di-tert-butyl peroxide, dicumyl peroxide, 2,5-dimethyl-2,5-di(tert-butylperoxy)hexyne and Luperox 101 2,5-dimethyl-2,5-di(tert-butylperoxy)hexane, all of which are commercially available.

The quantity of peroxide necessary for the visbreaking process preferably ranges from 0.001 to 1.5% by weight of the polymer, more preferably from 0.002 to 0.6%.

All the polymer components and compositions used for the membrane of the present invention can also contain additives commonly employed in the art, such as antioxidants, light stabilizers, heat stabilizers, nucleating agents, colorants and fillers.

As previously explained, the membrane of the present invention comprise a base layer (A) and a top layer (B).

Other layers, like in particular reinforcing layers, may be present.

Such reinforcing layers can be made of polyolefin materials, like propylene homopolymers and copolymers, or polyethylene terephthalate (PET). In particular they can be woven or non-woven fabrics made of fibers comprising the said polyolefin materials.

Preferred thickness values for the base layer (A) are of 500 µm or more.

Preferred thickness values for the top layer (B) are from 10 to 200 µm.

Preferably the ratio of the thickness of the base layer (A) to the thickness of the top layer (B) is from 5 to 100.

The membrane of the present invention can be prepared with the apparatuses and processes well known in the relevant art, in particular by extrusion, coextrusion and lamination.

In the coextrusion process, the polymer materials are fed to different extruders and coextruded one on top of the other via a slit die.

As the layers are in the molten state when they come in contact, they adhere each other without requiring any further treatment.

In the lamination process, the base layer (A) and the top layer (B), which are previously prepared by separate extrusion, are laminated together by means of heat. Additional layers can be easily introduced by way of the said lamination process.

Extrusion and coextrusion are carried out preferably with a melt temperature profile from 185 to 210 °C, and a head temperature from 200 to 220 °C.

It is preferred to carry out the lamination consecutively to the extrusion of the base layer (A), so that said base layer (A) is still hot when contacted with the top layer (B). In such a case the temperature of the first calander stack is from 40 to 60 °C.

The top layer (B) can be in form of a film, produced according to techniques well known in the art, like in particular the cast film process. However, also blown films and bioriented films (BOPP) can be used.

In the cast film process, the molten polymer materials are forced through a long, thin, rectangular shaped slit. The extrudate has the shape of a thin film. The film is cooled before winding-up.

As previously said, the membrane of the present invention can be in particular a membrane for use in roofing, namely a roofing membrane, or in geomembrane applications, namely a geomembrane.

The following examples are given to illustrate, not to limit, the present invention.

### Materials used in the examples

Heco-1 and Heco-2: heterophasic compositions (I) used to prepare the base layer (B). HECO-1 is a heterophasic polyolefin composition having a MFR of 0.6 g/10 min. and flexural modulus of 80 MPa, comprising (weight percentages):
A) 32% of a crystalline propylene random copolymer containing 3.5% of ethylene and about 6% of a fraction soluble in xylene at room temperature, and having an intrinsic viscosity [η] of 1.5 dl/g;
B) 68% of an ethylene/propylene copolymer containing 27% of ethylene, having solubility in xylene at room temperature of 89% by weight.

The intrinsic viscosity of the fraction soluble in xylene at room temperature of the total composition is of 3.2 dl/g.

Heco-2 is a heterophasic polyolefin composition having a MFR value of about 0.6 g/10 min., flexural modulus of 20 MPa and a content of fraction soluble in xylene at room temperature of 76% by weight, and comprising (weight percentages) 17% of a crystalline copolymer (A) of propylene with 3.3% of ethylene, and 83% of a copolymer (B) of propylene with ethylene containing 32% of ethylene, having solubility in xylene at room temperature of 90% by weight.

The intrinsic viscosity of the fraction soluble in xylene at room temperature of the total composition is of 2.8 dl/g.

Both Heco-1 and Heco-2 have been prepared by a sequential polymerization process in the presence of a stereospecific Ziegler-Natta catalyst supported on magnesium dichloride.

The top layer (B) is prepared from a composition (hereinafter called "copolymer composition") made of:
1) 35% by weight of a copolymer of propylene with ethylene, containing 3.25% by weight of ethylene (copolymer (i));
2) 65% by weight of a copolymer of propylene with ethylene and butene, containing 3.25% by weight of ethylene and 9.2% by weight of butene-1 (copolymer (iii));

Such copolymer composition has been prepared by a sequential polymerization process in the presence of a stereospecific Ziegler-Natta catalyst supported on magnesium dichloride and has MFR of 6 g/10 min.

All the said compositions contain a standard stabilizing formulation to prevent heat degradation.

### Examples 1 and 2 and Comparison Examples 1 and 2

In Example 1 two layer membranes are prepared by extruding Heco-1, to form the base layer (A), and laminating the said base layer with the previously prepared top layer (B).

Said top layer (B) is prepared in form of cast film with a conventional film production process.

Three production runs are carried out to produce membranes where the thickness of the base layer (A) is always of 1 mm, while the thickness of the top layer (B) is of 30 µm in Run 1, 50 µm in Run 2 and 100 µm in Run 3.

In Comparison Example 1 the top layer (B) is not produced.

Example 2 and Comparison Example 2 are carried out by using the same procedures as in Example 1 and Comparison Example 1 respectively, but using Heco-2 instead of Heco-1 to produce the base layer (A). The top layer (B) is made of the same copolymer of propylene as in Example 1

The extrusion and lamination steps are carried out under the previously described conditions.

The mechanical properties of the so obtained membranes are reported in Table 1 and TABLE 1b.

The following test methods are used to measure the specified properties.

### Tensile stress and strain at yield and at break

Determined according to ASTM D 6693.

### Traction elastic modulus (T.E.M.)

Determined according to ASTM D 6693.

### Tear resistance

Determined according to ASTM D 1004.

### Puncture resistance

Determined according to ASTM D 4833.

The stress/strain curves recorded for the measurement of the said tensile properties show that no delamination of the two layers occurs up to break.

**Table 1**

| Example No. | | 1 | | | Comp. 1 |
|---|---|---|---|---|---|
| | Run | 1 | 2 | 3 | |
| Variable Name | Units | | | | |
| Tensile stress at yield (50mm/min) MD | N/mm² | 5.5 | 5.9 | 6.7 | 5.7 |
| Tensile strain at yield (50mm/min) MD | % | 17.9 | 15.2 | 29.6 | 31.6 |
| Tensile stress at break (50mm/min) MD | N/mm² | 39.8 | 36.9 | - | 21.4 |
| Tensile strain at break (50mm/min) MD | % | 813 | 704 | 720 | 820 |
| T.E.M. traction MD | N/mm² | 59 | 69 | 111 | 57 |
| Tear resistance (50mm/min) Maximum Load MD | N | 68 | 75 | 88 | 71 |
| Puncture resistance (300mm/min) Maximum Load | N | 81 | 79 | 74 | 72 |
| Puncture resistance (300mm/min) deformation at break | mm | 12.4 | 11.4 | 10.6 | 11.1 |

| | | | | | |
|---|---|---|---|---|---|
| Note: Comp. = Comparison; MD = Machine Direction | | | | | |

**Table 1b**

| Example No. | | 2 | | | Comp. 2 |
|---|---|---|---|---|---|
| | Run | 1 | 2 | 3 | |
| Variable Name | Units | | | | |
| Tensile stress at yield (50mm/min) MD | N/mm² | - | - | 4.2 | - |
| Tensile strain at yield (50mm/min) MD | % | - | - | 35 | - |
| Tensile stress at break (50mm/min) MD | N/mm² | 10.7 | 10.5 | 10.4 | 12.3 |
| Tensile strain at break (50mm/min) MD | % | 570 | 500 | 640 | 800 |
| T.E.M. traction MD | N/mm² | 30 | 30 | 44 | 28 |
| Tear resistance (50mm/min) Max Load MD | N | 47 | 46 | 56 | 39 |
| Puncture resistance (300mm/min) Maximum Load | N | 42 | 44 | 35 | 30 |
| Puncture resistance (300mm/min) deformation at break | mm | 13.2 | 13.2 | 9.4 | 10.2 |

On the top layer of the membranes of Example 1, Run 1 and of Comparison Example 1, gloss measurements are carried out immediately after production and after ageing. Ageing is obtained by keeping the membranes a room temperature (about 25°C) for 5 days, in an oven at 60°C for 5 days (Oven ageing) or on a roof for 5 days as well (Natural ageing).

The said gloss measurements are carried out according to ASTM method D 2457, at 60°. The higher is the gloss value, the higher the resistance of the membrane to dirt pick up.

The results are reported in Table 2.

**Table 2**

| Membrane of Ex. No. | Gloss (‰) | | | |
|---|---|---|---|---|
| | No ageing | Room after 5 days | Oven after 5 days | Natural after 5 days |
| Comp. 1 | 80 | 79 | 76 | 74 |
| 1 | 84 | 83 | 79 | 82 |

Finally, on the membranes of Example 1, Run 1, Example 2, Run 1 and Comparison Examples 1 and 2 an assessment of stickiness and thermal weldability is made.

To assess stickiness, two pieces of the membrane are superimposed and kept in an oven at 60°C for 5 days under a load of 0.675 kPa. The strength to be applied to detach the two pieces after extraction from the oven is sensibly lower for the said membranes of Example 1 and 2 than for the corresponding membranes of Comparison Examples 1 and 2 respectively. The weldability test shows that the said membranes of Examples 1 and 2 can be welded at lower temperature than the corresponding membranes of Comparison Examples 1 and 2 respectively.

## Claims

1. A membrane comprising a base layer (A) and a top layer (B), where the base layer (A) comprises a heterophasic composition (I) containing the following polymer components, all percent amounts being by weight:
a) 10-40% of a propylene homopolymer, or a copolymer of propylene with ethylene or a CH₂=CHR α-olefin, where R is a C₂-C₈ alkyl radical, or a copolymer of propylene with ethylene and said CH₂=CHR α-olefin, said copolymers containing over 85% of propylene, and having a fraction insoluble in xylene at room temperature greater than 80%; and
b) 60-90% of one or more copolymers selected from (b1) copolymers of ethylene with propylene or a CH₂=CHR α-olefin, where R is a C₂-C₈ alkyl radical, and optionally minor quantities of a diene, and (b2) copolymers of ethylene with propylene and said α-olefin, and optionally minor quantities of a diene, said copolymers containing ethylene in a quantity lower than 40%, and having solubility in xylene at room temperature greater than 70%;
the amounts of (a) and (b) being referred to the total weight of (a) and (b); and the top layer (B) comprises a propylene homopolymer or a copolymer (i) of propylene with ethylene, or a copolymer (ii) of propylene with a CH₂=CHR α-olefin, where R is a C₂-C₈ alkyl radical, or a copolymer (iii) of propylene with ethylene and said α-olefin, or a combination of two or more of said homopolymer and copolymers (i), (ii) and (iii), all the said copolymers containing from 65 to 99% by weight of propylene; said top layer (B) being at least partially bonded to the base layer (A).

2. The membrane of claim 1, where the top layer (B) is at least partially bonded to the base layer (A) in the absence of a bonding agent.

3. The membrane of claim 1, wherein the base layer (A) has a thickness of 500 µm or more.

4. The membrane of claim 1, wherein the top layer (B) has a thickness from 10 to 200 µm.

5. The membrane of claim 1, wherein the ratio of the thickness of the base layer (A) to the thickness of the top layer (B) is from 5 to 100.

6. The membrane of claim 1, wherein the heterophasic composition (I) has flexural modulus of 50 MPa or higher.

7. The membrane of claim 1, wherein the top layer (B) comprises, all percent amounts being by weight:
1) 20-80% of one or more propylene copolymers selected from the group consisting of (1.i) propylene/ethylene copolymers containing 1-7% of ethylene; (1.ii) copolymers of propylene with a CH₂=CHR α-olefin, where R is a C₂-C₈ alkyl radical, containing 2-10% of the said α-olefin; (1.iii) copolymers of propylene with ethylene and a CH₂=CHR α-olefin, where R is a C₂-C₈ alkyl radical, containing 0.5-4.5% of ethylene and 2-6% of the said α-olefin, provided that the total content of ethylene and α-olefin in (1.iii) be equal to or lower than 6.5%;
2) 20-80% of one or more propylene copolymers selected from the group consisting of (2.ii) copolymers of propylene with a CH₂=CHR α-olefin, where R is a C₂-C₈ alkyl radical, containing from more than 10% to 30% of the said α-olefin; (2.iii) copolymers of propylene with ethylene and a CH₂=CHR α-olefin, where R is a C₂-C₈ alkyl radical, containing 1-7% of ethylene and 6-15% of the said α-olefin;
the amounts of (1) and (2) being referred to the total weight of (1) and (2).

8. The membrane of claim 1, wherein the top layer (B) comprises, all percent amounts being by weight:
1) from 15% to 60% of (1.ii) a copolymer of propylene with a CH₂=CHR α-olefin, where R is a C₂-C₈ alkyl radical, containing more than 10%, but less than 14%, of said α-olefin;
2) from 40% to 85% of (2.ii) a copolymer of propylene with a CH₂=CHR a-olefin, where R is a C₂-C₈ alkyl radical, containing from 14% to 30% of said α-olefin, or (2.iii) a copolymer of propylene with ethylene and one or more CH₂=CHR α-olefin, where R is a C₂-C₈ alkyl radical, containing from 0.5% to 3% of ethylene and from 14% to 30% of said α-olefin;
the amounts of (1) and (2) being referred to the total weight of (1) and (2).

9. Use of the membrane of claim 1 in roofing applications.

10. Use of the membrane of claim 1 in geomembrane applications.

## Patentansprüche

1. Membran umfassend eine Grundschicht (A) und eine Deckschicht (B), wobei die Grundschicht (A) eine heterophasische Zusammensetzung (I) umfasst, die die folgenden Polymerkomponenten enthält, wobei alle Prozentmengen auf das Gewicht bezogen sind:
a) 10-40 % eines Propylenhomopolymers oder eines Copolymers von Propylen mit Ethylen oder einem CH₂=CHR-α-Olefin, wobei R ein C₂-C₈-Alkylradikal ist, oder eines Copolymers von Propylen mit Ethylen und dem CH₂=CHR-α-Olefin, wobei die Copolymere mehr als 85% Propylen enthalten und eine in Xylol bei Raumtemperatur unlösliche Fraktion von mehr als 80 % aufweisen; und
b) 60-90 % eines oder mehrerer Copolymere ausgewählt aus (b1) Copolymeren von Ethylen mit Propylen oder einem CH₂=CHR-α-Olefin, wobei R ein C₂-C₈-Alkylradikal ist, und wahlweise geringen Mengen eines Diens und (b2) Copolymeren von Ethylen mit Propylen und dem α-Olefin und wahlweise geringen Mengen eines Dien, wobei die Copolymere Ethylen in einer Menge von weniger als 40 % enthalten und eine Löslichkeit in Xylol bei Raumtemperatur von mehr als 70 % aufweisen;
wobei die Mengen von (a) und (b) auf das Gesamtgewicht von (a) und (b) bezogen sind; und die Deckschicht (B) ein Propylenhomopolymer oder ein Copolymer (i) von Propylen mit Ethylen oder ein Copolymer (ii) von Propylen mit einem CH₂=CHR-α-Olefin, wobei R ein C₂-C₈-Alkylradikal ist, oder ein Copolymer (iii) von Propylen mit Ethylen und dem α-Olefin oder eine Kombination von zwei oder mehreren des Homopolymers und der Copolymere (i), (ii) und (iii) umfasst, wobei alle die Copolymere 65 bis 99 Gew.-% Propylen enthalten; wobei die Deckschicht (B) mindestens teilweise an die Grundschicht (A) bondiert ist.

2. Membran nach Anspruch 1, wobei die Deckschicht (B) mindestens teilweise an die Grundschicht (A) in Abwesenheit eines Bondiermittels bondiert ist.

3. Membran nach Anspruch 1, wobei die Grundschicht (A) eine Dicke von 500 µm oder mehr aufweist.

4. Membran nach Anspruch 1, wobei die Deckschicht (B) eine Dicke von 10 bis 200 µm aufweist.

5. Membran nach Anspruch 1, wobei das Verhältnis der Dicke der Grundschicht (A) zur Dicke der Deckschicht (B) 5 bis 100 beträgt.

6. Membran nach Anspruch 1, wobei die heterophasische Zusammensetzung (I) einen Biegemodul von 50 MPa oder mehr aufweist.

7. Membran nach Anspruch 1, wobei die Deckschicht (B) Folgendes umfasst, wobei alle Prozentmengen auf das Gewicht bezogen sind:
1) 20-80 % eines oder mehrerer Propylencopolymere ausgewählt aus der Gruppe bestehend aus (1.i) Propylen-Ethylen-Copolymeren enthaltend 1-7 % Ethylen; (1.ii) Copolymeren von Propylen mit einem CH₂=CHR-α-Olefin, wobei R ein C₂-C₈-Alkylradikal ist, das 2-10 % des α-Olefins enthält; (1.iii) Copolymeren von Propylen mit Ethylen und einem CH₂=CHR-α-Olefin, wobei R ein C₂-C₈-Alkylradikal ist, das 0,5-4,5 % Ethylen und 2-6 % des α-Olefins enthält, vorausgesetzt, dass der Gesamtgehalt von Ethylen und α-Olefin in (1.iii) gleich oder geringer als 6,5 % ist;
2) 20-80 % eines oder mehrerer Propylencopolymere ausgewählt aus der Gruppe bestehend aus (2.ii) Copolymeren von Propylen mit einem CH₂=CHR-α-Olefin, wobei R ein C₂-C₈-Alkylradikal ist, das mehr als 10% bis 30% des α-Olefins enthält; (2.iii) Copolymeren von Propylen mit Ethylen und einem CH₂=CHR-α-Olefin, wobei R ein C₂-C₈-Alkylradikal ist, das 1-7 % Ethylen und 6-15 % des α-Olefin enthält;
wobei die Mengen von (1) und (2) sich auf das Gesamtgewicht von (1) und (2) beziehen.

8. Membran nach Anspruch 1, wobei die Deckschicht (B) Folgendes umfasst, wobei alle Prozentmengen auf das Gewicht bezogen sind:
1) 15 % bis 60 % (1.ii) eines Copolymers von Propylen mit einem CH₂=CHR- α-Olefin, wobei R ein C₂-C₈-Alkylradikal ist, das mehr als 10 %, aber weniger als 14% des α-Olefins enthält;
2) 40 % bis 85 % (2.ii) eines Copolymers von Propylen mit einem CH₂=CHR-α-Olefin, wobei R ein C₂-C₈-Alkylradikal ist, das 14% bis 30% des α-Olefins enthält oder (2.iii) eines Copolymers von Propylen mit Ethylen und einem oder mehreren CH₂=CHR-α-Olefinen, wobei R ein C₂-C₈-Alkylradikal ist, das 0,5 % bis 3 % Ethylen und 14 % bis 30 % des α-Olefins enthält;
wobei die Mengen von (1) und (2) sich auf das Gesamtgewicht von (1) und (2) beziehen.

9. Verwendung der Membran nach Anspruch 1 bei Bedachungsanwendungen.

10. Verwendung der Membran nach Anspruch 1 bei Geomembrananwendungen.

## Revendications

1. Membrane comprenant une couche de base (A) et une couche de dessus (B), où la couche de base (A) comprend une composition hétérophasique (I) contenant les constituants polymères suivants, toutes les quantités de pourcentage étant en poids :
a) 10 à 40% d'un homopolymère de propylène ou d'un copolymère de propylène avec de l'éthylène ou avec une α-oléfine CH₂=CHR, où R représente un radical C₂-C₈-alkyle, ou d'un copolymère de propylène avec de l'éthylène et ladite α-oléfine CH₂=CHR, lesdits copolymères contenant plus de 85% de propylène et présentant une fraction insoluble dans le xylène à température ambiante supérieure à 80% ; et
b) 60-90% d'un ou de plusieurs copolymères choisis parmi (b1) les copolymères d'éthylène avec du propylène ou avec une CH₂=CHR-α-oléfine, R représentant un radical C₂-C₈-alkyle, et éventuellement des quantités mineures d'un diène et (b2) les copolymères d'éthylène avec du propylène et ladite α-oléfine, et éventuellement des quantités mineures d'un diène, lesdits copolymères contenant l'éthylène en une quantité inférieure à 40%, et présentant une solubilité dans le xylène à température ambiante supérieure à 70% ;
les quantités de (a) et (b) se référant au poids total de (a) et de (b) ; et la couche de dessus (B) comprend un homopolymère de propylène ou un copolymère (i) de propylène avec de l'éthylène, ou un copolymère (ii) de propylène avec une α-oléfine CH₂=CHR, où R représente un radical C₂-C₈-alkyle, ou un copolymère (iii) de propylène avec de l'éthylène et ladite α-oléfine, ou une combinaison de deux, ou plus, dudit homopolymère et desdits copolymères (i), (ii) et (iii), tous lesdits copolymères contenant 65 à 99% en poids de propylène ; ladite couche du dessus (B) étant au moins partiellement liée à la couche de base (A).

2. Membrane selon la revendication 1, où la couche de dessus (B) est au moins partiellement liée à la couche de base (A) en l'absence d'un agent de liaison.

3. Membrane selon la revendication 1, dans laquelle la couche de base (A) présente une épaisseur de 500 µm ou plus.

4. Membrane selon la revendication 1, dans laquelle la couche de dessus (B) présente une épaisseur de 10 à 200 µm.

5. Membrane selon la revendication 1, dans laquelle le rapport de l'épaisseur de la couche de base (A) à l'épaisseur de la couche de dessus (B) vaut de 5 à 100.

6. Membrane selon la revendication 1, dans laquelle la composition hétérophasique (i) présente un module de flexion de 50 MPa ou plus.

7. Membrane selon la revendication 1, dans laquelle la couche de dessus (B) comprend, toutes les quantités en pourcentage se référant au poids :
1) 20-80% d'un ou de plusieurs copolymères de propylène choisis dans le groupe constitué par (1.i) des copolymères de propylène/éthylène contenant 1-7% d'éthylène ; (1.ii) des copolymères de propylène avec une α-oléfine CH₂=CHR, où R représente un radical C₂-C₈-alkyle, contenant 2-10% de ladite α-oléfine ; (1.iii) des copolymères de propylène avec de l'éthylène et une α-oléfine CH₂=CHR, où R représente un radical C₂-C₈-alkyle, contenant 0,5-4,5% d'éthylène et 2-6% de ladite α-oléfine, à condition que la teneur totale en éthylène et en α-oléfine dans (1.iii) soit égale ou inférieure à 6,5% ;
2) 20-80% d'un ou de plusieurs copolymères de propylène choisis dans le groupe constitué par (2.ii) des copolymères de propylène avec une α-oléfine CH₂=CHR, où R représente un radical C₂-C₈-alkyle, contenant de plus de 10 à 30% de ladite α-oléfine ; (2.iii) des copolymères de propylène avec de l'éthylène et une α-oléfine CH₂=CHR, où R représente un radical C₂-C₈-alkyle, contenant 1-7% d'éthylène et 6-15% de ladite α-oléfine ;
les quantités de (1) et (2) se référant au poids total de (1) et (2).

8. Membrane selon la revendication 1, dans laquelle la couche de dessus (B) comprend, toutes les quantités en pourcentage se référant au poids :
1) 15% à 60% de (1.ii) un copolymère de propylène avec une α-oléfine CH₂=CHR, où R représente un radical C₂-C₈-alkyle, contenant plus de 10%, mais moins de 14%, de ladite α-oléfine ;
2) 40-85% de (2.ii) un copolymère de propylène avec une α-oléfine CH₂=CHR, où R représente un radical C₂-C₈-alkyle, contenant 14 à 30% de ladite α-oléfine ; ou (2.iii) un copolymère de propylène avec de l'éthylène et une ou plusieurs α-oléfines CH₂=CHR, où R représente un radical C₂-C₈-alkyle, contenant 0,5-3% d'éthylène et 14-30% de ladite α-oléfine ;
les quantités de (1) et (2) se référant au poids total de (1) et (2).

9. Utilisation de la membrane selon la revendication 1 dans des applications de toiture.

10. Utilisation de la membrane selon la revendication 1 dans des applications de géomembrane.
